# FASCICULE DE BREVET EUROPEEN

(11) **EP 1 780 398 B1**
(45) Date de publication et mention de la délivrance du brevet: **13.04.2011**
(21) Numéro de dépôt: 06291647.3
(22) Date de dépôt: 24.10.2006
(51) Int. Cl.: F02M 35/12

(54) **Raccord souple apte à être monté dans une ligne d'admission d'air d'un moteur thermique turbocompressé**
Ansaugschalldämpfer für einer Brennkraftmaschine mit Turbolader
Intake silencer for a turbo compressed engine

(30) Priorité: 25.10.2005 FR 0510864
(43) Date de publication de la demande: 02.05.2007
(73) Titulaire: Hutchinson, 75008 Paris (FR)
(72) Inventeur: Blin, Philippe, 37260 Monts (FR); Ciolczyk, Jean-Pierre, 45200 Montargis (FR); Bourdariat, Antoine, 45120 Chalette sur Loing (FR); Zannelli, Carole, 45200 Montargis (FR)
(74) Mandataire: Schwartz, Thierry J.

(56) Documents cités:
- DE-A1- 3 531 353
- DE-A1- 10 026 355
- DE-A1- 10 058 479
- US-A- 2 014 368
- US-A- 5 548 093

## Description

L'invention concerne un raccord souple apte à être monté dans une ligne d'admission d'air d'un moteur thermique turbocompressé.

D'une manière générale et d'une façon connue en soi, dans une ligne d'admission d'air d'un moteur thermique turbocompressé, le turbocompresseur est relié en entrée à une prise ou bouche d'air avec interposition d'un filtre à air, et est relié en sortie au collecteur d'admission d'air du moteur avec interposition d'un refroidisseur d'air de suralimentation ou RAS.

Parmi les problèmes rencontrés dans une telle ligne d'admission d'air, il y a notamment celui du découplage qu'il faut assurer entre le turbocompresseur qui est fixé au moteur et le refroidisseur d'air de suralimentation qui est fixé au châssis du moteur, et celui des bruits occasionnés par le turbocompresseur. Pour résoudre ces deux problèmes, on utilise dans l'art antérieur au moins un raccord souple en caoutchouc avec ou sans ondes, ondes qui est interposé entre la sortie du turbocompresseur et l'entrée du refroidisseur d'air de suralimentation, et on utilise un atténuateur de bruit placé au plus près de la sortie du turbocompresseur et qui est monté en série avec le raccord souple de découplage.

Par ailleurs, l'air de suralimentation du moteur est chargé d'huile et, à l'heure actuelle, ce mélange peut être à une température de l'ordre de 150 à 230°C et à une pression de 1 à 2,5 bars en sortie du turbocompresseur. Dans ces conditions, le raccord souple de découplage doit non seulement supporter les débattements liées aux vibrations et aux mouvements du moteur en fonctionnement, mais doit surtout être capable de résister à la température du mélange et à l'agressivité de l'huile introduite par la lubrification du turbocompresseur. Pour satisfaire à ces contraintes, la structure du raccord souple est généralement du type multicouche avec notamment une couche interne à base de fluorosilicone, de fluorocarbone ou d'EAM par exemple pour résister à la température du mélange d'air et résister à l'agressivité de l'huile contenu dans le mélange, ce qui aboutit à une structure relativement complexe et onéreuse. Un tel raccord est divulguée dans le document US-5 548 093.

D'une manière générale, selon cet art antérieur, les problèmes liés au découplage et aux bruits occasionnés par le turbocompresseur sont dissociés l'un de l'autre et résolus séparément l'un de l'autre.

Enfin, à l'heure actuelle, il est envisagé d'avoir en sortie du turbocompresseur un mélange air-huile à une température pouvant atteindre 250°C et à une pression supérieure à 2,5 bars.

Un but de l'invention est de résoudre les problèmes de découplage et d'atténuation des bruits occasionnés par le turbocompresseur selon une conception nouvelle et originale, et la solution à ces problèmes prend en compte l'augmentation de la température du mélange air-huile en sortie du turbocompresseur et ce, d'une manière fiable, efficace et économique.

A cet effet, l'invention propose un raccord souple apte à être monté dans une ligne d'admission d'air d'un moteur thermique turbocompressé, qui est caractérisé en ce qu'il est constitué par au moins un élément tubulaire interne flexible et métallique qui est percé d'ouvertures, une couche intermédiaire d'isolation thermique et acoustique dépourvue de mousse, et un manchon externe renforcé souple et ondulé, ce raccord permettant d'assurer au moins une fonction de découplage du fait de sa souplesse et une fonction d'atténuation acoustique par la présence des ouvertures dans l'élément tubulaire interne et de la couche intermédiaire qui forment un silencieux.

Avantageusement, selon un mode de réalisation de l'invention, l'élément tubulaire interne est constitué par un agrafé, la couche intermédiaire d'isolation thermique et d'atténuation acoustique est constituée par un matériau fibreux, granulaire ou poreux avec des pores communiquant avec l'extérieur, et le manchon externe souple peut être un élément à base de caoutchouc, choisi parmi un caoutchouc chloré, fluoré, acrylique, polyacrylique et siliconé, qui résiste à l'agressivité de l'huile contenu dans le mélange d'air, et qui comporte un renfort tricoté pour résister à la pression.

Selon une autre caractéristique de l'invention, l'élément tubulaire interne est percée d'ouvertures sous la forme de trous et/ou de fentes, ces ouvertures pouvant être régulièrement espacées et de dimensions fixes ou variables en fonction de la plage des fréquences des bruits à atténuer.

L'invention concerne également un moteur thermique turbocompressé dont la ligne d'admission d'air incorpore au moins un raccord souple tel que défini précédemment pour assurer une fonction de découplage et une fonction d'atténuation acoustique des bruits occasionnés par le turbocompresseur.

Un raccord souple selon l'invention présente de nombreux avantages parmi lesquels il faut notamment citer :
- un encombrement réduit puisqu'il assure deux fonctions jusque là réalisées par deux éléments distincts montés en série ;
- une faculté de pouvoir tenir à des températures supérieures à 200°C et à une pression supérieure à 2,5 bars, sachant que l'augmentation de la valeur de ces paramètres a une incidence favorable pour diminuer la cylindrée du moteur avec des effets favorables sur le plan écologique ; et
- le recours à des matériaux d'un prix de revient très économique pour des performances améliorées.

D'autres avantages, caractéristiques et détails de l'invention ressortiront du complément de description qui va suivre en référence à des dessins annexés, donnés uniquement à titre d'exemple et dans lesquels :
- la figure 1 est une vue en perspective d'une ligne d'admission d'air d'un moteur turbocompressé selon l'art antérieur ; et
- la figure 2 est une vue en coupe partielle d'un raccord souple selon l'invention qui peut être monté dans la ligne d'admission d'air de la figure 1.

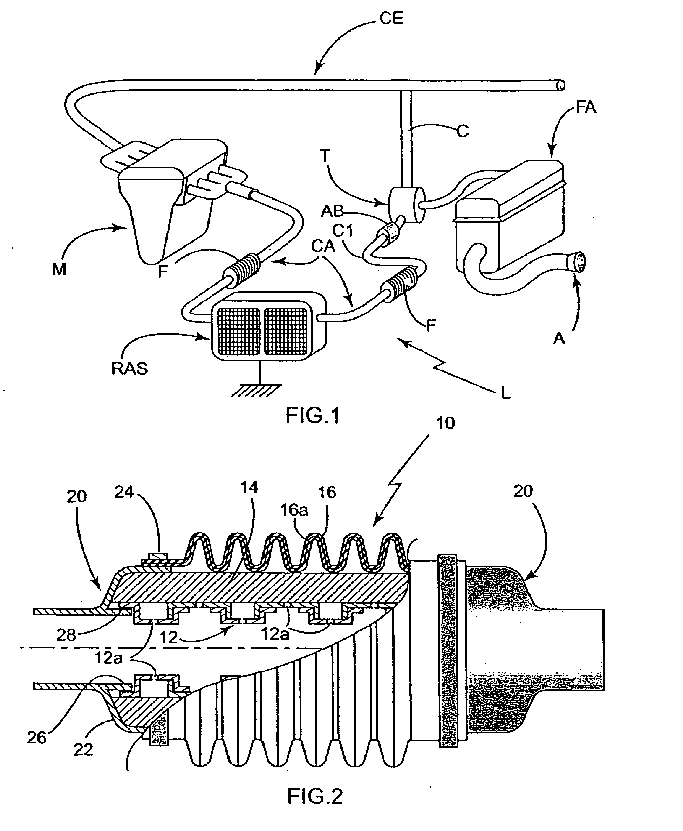

La figure 1 représente une ligne d'admission d'air L classique d'un moteur thermique M équipé d'un turbocompresseur T selon l'art antérieur évoqué en préambule. Le turbocompresseur T est relié en entrée à une entrée d'air A avec interposition d'un filtre à air FA, et est relié en sortie au collecteur d'admission CA du moteur avec interposition d'un refroidisseur d'air de suralimentation RAS. D'une façon connue en soi, le turbocompresseur T comprend un compresseur qui met sous pression l'air atmosphérique entrant par l'entrée d'air A, et une turbine qui est entraînée par une partie des gaz d'échappement prélevés par un conduit C dans le collecteur d'échappement CE du moteur M pour commander le compresseur.

Etant donné que le turbocompresseur T est solidaire du moteur M et que le refroidisseur d'air de suralimentation RAS est fixé sur le châssis du moteur M, il faut notamment au moins assurer un découplage dans le conduit C1 qui relie la sortie du turbocompresseur T et l'entrée du refroidisseur d'air de suralimentation RAS. Ce découplage est assuré par un soufflet F qui forme une partie du conduit C1 et qui est à structure multi-couche pour résister notamment à la température du mélange air-huile qui peut atteindre 200°C et à l'agressivité de l'huile. Par ailleurs, on intercale au moins un amortisseur de bruit AB en sortie du turbocompresseur T pour atténuer les bruits occasionnés par ledit turbocompresseur.

Selon l'invention, le soufflet F et l'amortisseur de bruit AB qui sont montés en série sur la figure 1, sont remplacés par un raccord souple 10 qui assure à la fois la fonction de découplage et la fonction d'atténuation acoustique des bruits, et dont la structure est également apte à tenir à une température supérieure à 250°C et à une pression supérieure à 2,5 bars.

Un exemple de réalisation de ce raccord souple 10 est illustré à la figure 2, et sa structure est constituée par au moins un élément tubulaire interne 12 flexible et métallique qui est percé d'ouvertures 12a, une couche intermédiaire d'isolation thermique et d'atténuation acoustique 14, et un manchon externe 16 souple et ondulé.

L'élément tubulaire interne 12 peut être avantageusement constitué par un agrafé métallique simple ou double, la couche intermédiaire 14 peut être constituée par un matériau avantageusement fibreux, granulaire, ou poreux avec des pores communiquant avec l'extérieur, de l'ouate par exemple ou un matériau non tissé ou tricoté, et le manchon externe souple et ondulé 16 peut être réalisé en un matériau à base de caoutchouc, tel un caoutchouc chloré, fluoré, acrylique, polyacrylique ou siliconé, qui résiste à l'agressivité de l'huile contenu dans le mélange d'air qui pourrait venir au contact du manchon 16 au travers des ouvertures 12a de l'agrafé et de la couche intermédiaire 14, bien que l'agrafé 12 protège déjà la couche intermédiaire du flux d'air. La couche intermédiaire est dépourvue de mousse afin d'exercer la double fonction d'isolation (acoustique et thermique) entre le turbocompresseur T et le refroidissement RAS, au regard de la tenue aux températures connues et escomptées dans le contexte de turbocompression (pouvant atteindre 200°C et même au-delà).

Le matériau utilisé pour réaliser le manchon externe 16 n'a pas besoin de résister à une température supérieure à 130°C, car cette température est globalement celle qui règne sous le capot moteur d'une part, et la température de l'air d'admission qui circule dans le conduit C₁ est au moins divisée par deux par la présence de la couche intermédiaire 14 qui assure une isolation thermique d'autre part. Ainsi, le manchon externe 16 peut être fabriqué à partir d'un matériau très économique, et comporte un renfort textile 16a pour résister à la pression.

Les ouvertures 12a percées dans l'élément tubulaire interne 12 peuvent être de simples trous et/ou des fentes régulièrement espacés ou non le long dudit élément 12, sachant que le nombre, la forme, l'espacement et/ou les dimensions de ces ouvertures 12a sont fonctions de la plage des fréquences de bruits à atténuer tout en conservant la fonction de protection au flux d'air par l'agrafé. A titre d'exemple, pour atténuer une plage de fréquences allant de 1500Hz à 3500Hz, on réalise des ouvertures 12a sous la forme de trous d'un diamètre de 3mm de diamètre et qui sont espacés de 5,3mm. D'une manière générale, les ouvertures 12a peuvent avoir un diamètre de 2 à 3mm et être espacées d'une distance de 5 à 30mm.

Le raccord souple 10 présente à chacune de ses deux extrémités une connectique de raccordement 20 pour être intercalé dans le conduit C₁ reliant la sortie du turbocompresseur T et l'entrée du refroidisseur d'air de suralimentation RAS. Chaque connectique de raccordement 20 comprend par exemple une coiffe métallique 22 qui vient en prise avec le manchon externe 16 par l'intermédiaire d'un collier de serrage 24 classique. La coiffe métallique 22 présente un embout tubulaire interne 26 sur lequel l'élément tubulaire interne 12 est soudé en 28.

D'une manière générale, le raccord souple 10 peut être réalisé avec un élément tubulaire interne 12 ayant un diamètre compris entre 25 et 80mm, une couche intermédiaire 14 d'une épaisseur entre 2 et 10mm et un manchon externe ondulé d'une épaisseur de 1 à 3mm, sachant que le nombre des ondulations du manchon externe 16, la forme, le nombre et l'espacement des ouvertures 12a faites dans l'élément tubulaire interne, et l'épaisseur et la nature de la couche intermédiaire 14, sont fonction de la plage de fréquences des bruits à atténuer et de l'isolation recherchée.

Bien entendu, l'invention s'applique à tout raccord souple susceptible d'être monté dans une ligne d'admission d'air ou toute autre application nécessitant un découplage et une atténuation acoustique à haute température et à pression élevée.

## Revendications

1. Raccord souple apte à être monté notamment dans une ligne d'admission d'air d'un moteur thermique turbocompressé et à supporter des températures supérieures à 250°C et une pression supérieure à 2,5 bars, ce raccord étant constitué par au moins un élément interne (12) flexible et métallique, une couche intermédiaire d'atténuation acoustique et un manchon externe (16) souple et ondulé, **caractérisé en ce que** le manchon externe (16) est renforcé, **en ce que** la couche intermédiaire est réalisée en un matériau fibreux (14) d'isolation thermique et d'atténuation acoustique et est dépourvue de mousse et **en ce que** l'élément interne est tubulaire et percé d'ouvertures (12a), dont le nombre, l'espacement et/ou les dimensions sont fonction de la plage des fréquences de bruit à atténuer, cet élément interne protégeant la couche intermédiaire du flux d'air, ce raccord (10) permettant d'assurer au moins une fonction de découplage du fait de sa souplesse et une fonction d'atténuation acoustique par la présence des ouvertures (12a) dans l'élément tubulaire interne (12) et de la couche intermédiaire (14) qui forment un silencieux.

2. Raccord souple selon la revendication 1, dans lequel l'élément tubulaire interne (12) est constitué par un agrafé qui est percé d'ouvertures (12a) sous la forme de trous et/ou de fentes, régulièrement espacées et de dimensions fixes ou variables.

3. Raccord souple selon la revendication 1 ou 2, dans lequel la couche intermédiaire (14) d'isolation thermique et d'atténuation acoustique est constituée par un matériau fibreux ou poreux avec des pores communiquant avec l'extérieur.

4. Raccord souple selon la revendication 3, dans lequel le matériau poreux est de l'ouate.

5. Raccord souple selon l'une des revendications précédentes, dans lequel le manchon externe (16) comporte un renfort textile (16a) pour résister à la pression.

6. Raccord souple selon la revendication 5, dans lequel le manchon externe (16) est réalisé en un matériau à base de caoutchouc, choisi parmi un caoutchouc chloré, fluoré, acrylique, polyacrylique et siliconé.

7. Raccord souple selon l'une des revendications
précédentes, dans lequel l'élément tubulaire interne (12) à un diamètre compris entre 25 et 80mm, la couche intermédiaire (14) a une épaisseur comprise entre 2 et 10mm, et le manchon externe (16) a une épaisseur de l'ordre de 1 à 3mm.

8. Moteur thermique comprenant une ligne d'admission d'air de suralimentation, **caractérisé en ce que** la ligne d'admission d'air incorpore au moins un raccord souple (10) tel que défini par l'une des revendications précédentes pour assurer une fonction de découplage et d'atténuation des bruits occasionnés par le turbocompresseur.

## Claims

1. Flexible connector designed to be assembled in particular in an air intake line of a turbo compressed thermal engine and to withstand temperatures above 250°C and a pressure above 2.5 bar, which connector comprises at least one flexible metallic inner element (12), an intermediate sound attenuating layer and a flexible and corrugated outer sleeve (16), **characterised in that** the outer sleeve (16) is reinforced, the intermediate layer is made from a heat-insulating and sound attenuating fibrous material (14) and is devoid of foam, and the inner element is tubular and has openings (12a), the number, spacing and/or dimensions of which depend on the range of noise frequencies to be attenuated, this inner element protecting the intermediate layer from the air flow, this connector (10) fulfilling at least a decoupling function due to its flexibility and a sound attenuating function due to the presence of the openings (12a) in the inner tubular element (12) and intermediate layer (14) which constitute a silencer.

2. Flexible connector as claimed in claim 1, in which the inner tubular element (12) is provided in the form of a staple-lasted incorporating openings (12a) in the form of regularly spaced holes and/or slots of fixed or variable dimensions.

3. Flexible connector as claimed in claim 1 or 2, in which the heat insulating and sound attenuating intermediate layer (14) is made from a fibrous or porous material with pores communicating with the exterior.

4. Flexible connector as claimed in claim 3, in which the porous material is wadding.

5. Flexible connector as claimed in one of the preceding claims, in which the outer sleeve (16) has a fabric reinforcement (16a) in order to withstand the pressure.

6. Flexible connector as claimed in claim 5, in which the outer sleeve (16) is made from a material with a rubber base, selected from chlorinated, fluorinated, acrylic, polyacrylic and silicone rubber.

7. Flexible connector as claimed in one of the preceding claims, in which the inner tubular element (12) has a diameter of between 25 and 80 mm, the intermediate layer (14) has a thickness of between 2 and 10 mm and the outer sleeve (16) has a thickness in the order of 1 to 3 mm.

8. Thermal engine comprising a supercharging air intake line, **characterised in that** the air intake line incorporates at least one flexible connector (10) as defined in one of the preceding claims to fulfil a function of decoupling and attenuating the noise caused by the turbo compressor.

## Patentansprüche

1. Biegsame Verbindung, welche geeignet ist, insbesondere an einer Luftzufuhrleitung eines thermischen Motors mit Turbokompression angebracht zu werden und Temperaturen größer als 250°C und einen Druck größer als 2,5 Bar auszuhalten, wobei die Verbindung durch mindestens ein flexibles und metallisches inneres Element (12), eine Zwischenschicht zur akustischen Dämpfung und eine biegsame und gewellte äußere Muffe (16) gebildet wird, **dadurch gekennzeichnet, dass** die äußere Muffe (16) verstärkt ist, dass die Zwischenschicht aus einem Fasermaterial (14) zur thermischen Isolation und zur akustischen Dämpfung gefertigt ist und frei von Schaum ist und dass das innere Element rohrförmig ist und von Öffnungen (12a) durchbrochen ist, deren Anzahl, Beabstandung und/oder Abmessungen in Abhängigkeit des Frequenzbereiches von zu dämpfenden Lärm ist, wobei das innere Element die Zwischenschicht vor Luftfluss schützt, wobei die Verbindung (10) es erlaubt, zumindest eine Entkopplungsfunktion aufgrund seiner Flexibilität und eine akustische Dämpfungsfunktion durch das Vorhandensein der Öffnungen (12a) in dem inneren rohrförmigen Element (12) und der Zwischenschicht (14), welche einen Schalldämpfer bilden, sicherzustellen.

2. Biegsame Verbindung nach Anspruch 1, bei welcher das innere rohrförmige Element (12) durch eine Klammer gebildet wird, welche von den Öffnungen (12a) in Form von Löchern und/oder Schlitzen durchbohrt ist, welche regelmäßig beabstandet sind und feste oder variable Abmessungen aufweisen.

3. Biegsame Verbindung gemäß Anspruch 1 oder 2, bei welcher die Zwischenschicht (14) zur thermischen Isolation und zur akustischen Dämpfung durch ein faserartiges oder poröses Material gebildet ist, wobei die Poren mit der Außenseite in Verbindung stehen.

4. Biegsame Verbindung gemäß Anspruch 3, bei welcher das poröse Material aus Watte ist.

5. Biegsame Verbindung gemäß einem der vorhergehenden Ansprüche, bei welcher die äußere Muffe (16) eine textile Verstärkung (16a) zum Widerstand gegen Druck aufweist.

6. Biegsame Verbindung gemäß Anspruch 5, bei welcher die äußere Muffe (16) aus einem Material basierend auf Kautschuk gefertigt ist, ausgewählt aus einem chlorhaltigen Kautschuk, fluorhaltigen Kautschuk, Acrylkautschuk, Polyacrylkautschuk und Silikonkautschuk.

7. Biegsame Verbindung gemäß einem der vorhergehenden Ansprüche, bei welcher das innere rohrförmige Element (12) einen Durchmesser zwischen 25 und 80 mm aufweist, die Zwischenschicht (14) eine Dicke zwischen 2 und 10 mm aufweist und die äußere Muffe (16) eine Dicke in der Größenordnung von 1 bis 3 mm aufweist.

8. Thermischer Motor umfassend eine Luftzufuhrleitung zur Vorverdichtung, **dadurch gekennzeichnet, dass** die Luftzufuhrleitung zumindest eine biegsame Verbindung (10) wie durch einen der vorhergehenden Ansprüche definiert aufweist, um eine Funktion der Entkopplung und der Dämpfung von durch den Turbokompressor verursachten Lärm sicherzustellen.
